# EUROPÄISCHE PATENTSCHRIFT

(11) **EP 2 833 016 B1**
(45) Veröffentlichungstag und Bekanntmachung des Hinweises auf die Patenterteilung: **02.08.2017**
(21) Anmeldenummer: 14000935.8
(22) Anmeldetag: 14.03.2014
(51) Int. Cl.: F16D 55/00, F16D 55/22

(54) **Abschirmvorrichtung für eine Bremsscheibe**
Cover device for a brake disc
Dispositif de blindage pour un disque de frein

(30) Priorität: 31.07.2013 DE 102013012689
(43) Veröffentlichungstag der Anmeldung: 04.02.2015
(73) Patentinhaber: MAN Truck & Bus AG, 80995 München (DE)
(72) Erfinder: Beierer, Philipp, 85716 Unterschleißheim (DE); Ganis, Maximilian Ludwig, 80796 München (DE); Wittmann, Thomas, 86368 Gersthofen (DE)
(74) Vertreter: v. Bezold & Partner Patentanwälte - PartG mbB

(56) Entgegenhaltungen:
- EP-A1- 0 555 822
- DE-A1- 4 344 051
- DE-A1-102004 044 514
- DE-U1- 9 405 158
- US-A- 4 005 768
- US-A- 6 155 650

## Beschreibung

Die Erfindung betrifft eine Abschirmvorrichtung für eine Bremsscheibe. Die Erfindung betrifft insbesondere ein Bremsenabdeckblech für eine Scheibenbremse, das mit Luftaustrittsöffnungen versehen ist.

Fahrzeugbremsen wandeln kinetische und potentielle Energie durch Reibung in Wärme um. Diese Wärme wird zunächst in den Bremsscheiben gespeichert und anschließend durch Wärmeleitung und Strahlung an die Umgebung abgegeben. Zudem wird durch freie und erzwungene Konvektion Wärme von den Bremsscheiben abgeführt.

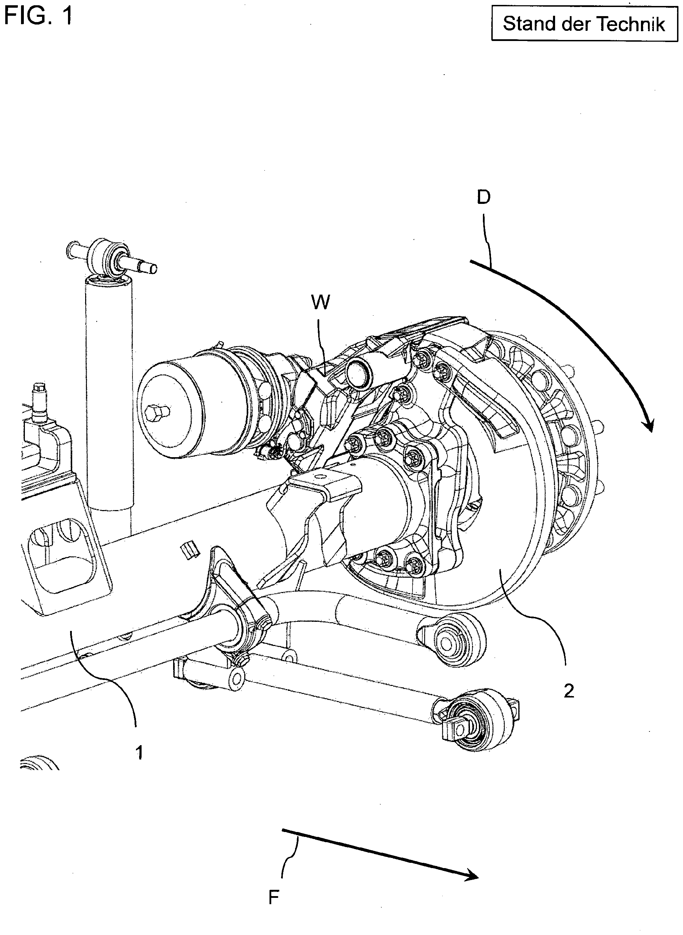

Aus dem Stand der Technik ist bekannt, dass bei Nutzfahrzeugen mit einer Scheibenbremsanlage zum Schutz der Bremsscheibe und der Bremse im Ganzen ein Bremsscheibenabschirmblech am Achsstummel festgeschraubt wird. Die Montage wird so ausgeführt, dass das Blech zu großen Teilen den freiliegenden Bereich der Bremsscheibe verdeckt. FIG. 1 zeigt eine Perspektivansicht eines Endbereichs einer Fahrzeugachse 1 mit einem solchen aus dem Stand der Technik bekannten Abschirmblech 2, das an dem Achsstummel zum Schutz der Bremsscheibe montiert wurde.

Diese Abschirmbleche verhindern das Eindringen von Wasser und Schmutzpartikeln in die Reibpaarung zwischen der Bremsscheibe und dem Bremsbelag. Zudem schirmen die Bremsenabdeckbleche in der Umgebung der Bremse angeordnete Komponenten wie Raddrehzahlsensoren, Sensor- und Bremsleitungen gegen Wärmestrahlung ab.

Derartige Konstruktionen haben jedoch den Nachteil, dass ein solches Bremsscheibenschutzblech eine effektive Um- und Anströmung der Bremsanlage verhindert. Somit ist der Wärmetransport, insbesondere die Abführung von Wärme durch z. B. Konvektion, reduziert. Die erhöhte Bauteiltemperatur im Nahfeld der Bremsbeläge hat eine Reduktion der Bremsenstandfestigkeit zur Folge bzw. fördert den Verschleiß der Bremse. Hieraus resultiert ein Zielkonflikt bei der Entwicklung von Bremsenabdeckblechen, der aus den sich widersprechenden Anforderungen nach maximalem Schutz der Bremse und maximaler Kühlleistung besteht.

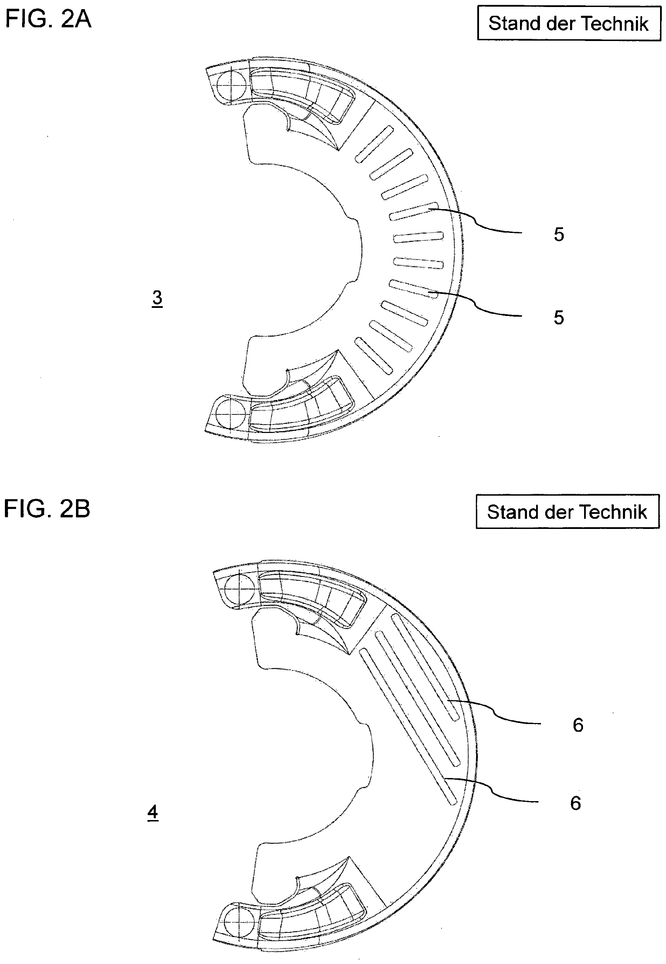

Um die Kühlleistung bei der Verwendung von Bremsenabdeckblechen zu verbessern, sind aus dem Stand der Technik weitere Ansätze bekannt, die in den FIG. 2A und 2B illustriert sind. Hierbei ist das Abschirmblech mit geraden Öffnungsschlitzen 5 versehen, die radial entlang der Seitenfläche des Abschirmbleches angeordnet sind. Eine andere aus dem Stand der Technik bekannte Realisierung sieht vor, gerade Öffnungsschlitze in das Abschirmblech einzuarbeiten, die gruppenweise parallel und kreissehnenförmig ausgerichtet sind. Derartige Öffnungsschlitze verbessern zwar den Wärmeabtransport, haben jedoch den Nachteil, dass diese Öffnungen einen offenen Zugang zu der Bremsscheibe bieten und dadurch einen verminderten Schutz vor Verschmutzung aufweisen. Auf Grund der freien Zugänglichkeit zur Bremsscheibe können Schmutzpartikel ungehindert durch die Schlitze in die Bremsanlage eintreten. Somit wird eine mögliche Senkung der Bremsenbetriebstemperatur auf Kosten eines verschlechterten Verschleißverhaltens der Bremse realisiert.

Ferner ist aus der DE 94 05 158 U1 eine mit der Radauflagefläche des Fahrzeugs verbundene bzw. verbindbare Scheibenblende bekannt, die sich radial mindestens über die radiale Breite der Bremsscheibe bzw. des Bremssattels des Fahrzeugs erstreckt und die im Radialbereich eingestanzte oder eingepresste Lufteintrittsöffnungen aufweist, die als zu der Bremsanlage hinspringende napfförmige Ausbauchungen des Scheibenkörpers ausgebildet sind. Aus der DE 43 44 051 A1 ist eine scheibenförmige Schutzabdeckung für eine Scheibenbremse bekannt, die über ihre Schutzscheibenfläche mit schlitzförmigen Luftdurchtritten versehen ist, welche jeweils durch aus der Scheibenebene zur einen und zur anderen Scheibenseite hin ausgestellte radial ausgerichtete Stege gebildet sind. Ferner ist aus der US 6,155,650 A eine Abdeckung für eine Scheibenbremse bekannt, die an der Seitenfläche kreisförmige Öffnungen aufweist und an ihrer Randfläche rechteckförmige Öffnungen mit Kanten aufweist. Aus der DE 10 2004 044 514 A1 ist ein Bremsenabdeckblech für eine Scheibenbremse offenbart, das mit mehreren Luftdurchtrittsöffnungen versehen ist. Die Luftdurchtrittsöffnungen sind jeweils als Schlitz mit zwei Kanten ausgebildet, wobei sich eine Kante an einer muschelförmigen Auswölbung befinden kann und bogenförmig gekrümmt sein kann.

Eine Aufgabe der Erfindung ist es, eine Bremsscheibenabschirmvorrichtung bereitzustellen, die Nachteile herkömmlicher Bremsscheibenabschirmvorrichtungen vermeidet. Die Bremsscheibenabschirmvorrichtung soll insbesondere eine verbesserte Kühlleistung der Bremse ermöglichen und gleichzeitig einen hohen Schutz vor Verschmutzung und Beschädigung der Bremse ermöglichen.

Diese Aufgaben werden durch eine Bremsscheibenabschirmvorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Bremsscheibenabschirmvorrichtung weist in Übereinstimmung mit dem Stand der Technik mindestens zwei schlitzförmige Luftaustrittsöffnungen in einer Seitenfläche der Bremsscheibenabschirmvorrichtung auf. Die Seitenfläche ist derjenige Teil der Bremsscheibenabschirmvorrichtung, der im montierten Zustand die Seitenfläche einer Bremsscheibe zumindest teilweise überdeckt.

Gemäß allgemeinen Gesichtspunkten der Erfindung weisen die mindestens zwei Luftaustrittsöffnungen jeweils eine Rippe auf, die von der Seitenfläche absteht. Eine derartige Ablenkrippe, nachfolgend auch als Kante oder Lippe bezeichnet, kann von der Seitenfläche der Bremsscheibenabschirmvorrichtung nach innen, d. h. zu der der Bremsscheibe zugewandten Seite, abstehen oder nach außen, d. h. zu der von der Bremsscheibe abgewandten Seite, ausgestellt sein.

Die Ablenkrippen sind dabei derart zu einer Radialrichtung der Seitenfläche verkippt angeordnet, dass die Ablenkrippen im Wesentlichen senkrecht zu einer Luftstromrichtung eines im Fahrbetrieb durch eine Drehbewegung der Bremsscheibe abgelenkten Luftstroms angeordnet sind.

Das Vorsehen von abstehenden Rippen, die an die Luftaustrittsöffnungen angeformt sind, hat den Vorteil, dass die Rippen die Durchtrittsöffnungen gegen das Eindringen von Schmutz abschirmen.

Gleichzeitig verbessern die erfindungsgemäßen Ablenkrippen die Wärmekonvektion aus dem Innenraum zwischen Bremsscheibe und Abschirmvorrichtung. Stehen die Ablenkrippen nach innen ab, d. h. zu der der Bremsscheibe zugewandten Seite, werden die sich im Zwischenraum zwischen Bremsscheibe und Abschirmvorrichtung bewegenden Luftmassen beim Auftreffen auf die Ablenkrippen durch diese durch die Luftaustrittsöffnungen nach außen abgelenkt. Werden die Ablenkrippen nach außen abstehend angeformt, erzeugen diese auf der der Bremsscheibe abgewandten Seite des Abschirmblechs einen Unterdruck, wodurch ebenfalls wieder die Luftströme durch die Luftaustrittsöffnungen nach außen abgelenkt werden.

Vorteilhafterweise werden nun die Rippen so ausgerichtet, dass die von der Seitenfläche der Bremsscheibenabschirmvorrichtung abstehende Fläche der Rippen möglichst senkrecht zu der Luftstromverteilung im Zwischenraum zwischen Scheibenbremse und Abschirmvorrichtung ist. Eine solche Ausrichtung maximiert die Ablenkwirkung der Rippen und damit den Kühleffekt.

Dem Fachmann ist bekannt, dass im Fahrbetrieb ein Kühlluftstrom am Innendurchmesser der Scheibenbremsen zur Kühlung derselben eingeleitet werden kann und anschließend durch eine Drehbewegung der Bremsscheibe abgelenkt wird. Daraus resultiert eine Luftströmung im Innenbereich zwischen Bremsscheibe und Abschirmvorrichtung mit einer typischen Verteilung der Geschwindigkeitsvektoren der Luftströmung. Diese ist auch von der Fahrgeschwindigkeit in Vorwärtsrichtung abhängig, da mit zunehmender Fahrgeschwindigkeit die Rotationsgeschwindigkeit der Bremsscheibe und damit die Ablenkung der Luftströme zunimmt.

Das Merkmal, dass die Rippen im Wesentlichen senkrecht zu einer Luftstromrichtung eines im Fahrbetrieb durch eine Drehbewegung der Bremsscheibe abgelenkten Luftstroms angeordnet sind, ist im Sinne der Erfindung so zu verstehen, dass dies für einen typischen Geschwindigkeitsbereich beispielsweise zwischen 55 und 100 km/h oder zwischen 75 und 90 km/h der Fall ist, für den die Bremskühlung optimiert ausgelegt wird.

Die Ablenkrippen können in einem senkrechten Winkel von der Seitenoberfläche nach innen oder nach außen abstehen. Vorzugsweise bilden die Ablenkrippen jedoch einen spitzen Ausstellwinkel bzgl. der Seitenoberfläche, um eine besonders effektive Ableitung der Luftströme aus dem Innern der Bremsanlage zu erzielen. Durch einen spitzen Ausstellwinkel wird eine Ablenkrampe für die Luftströme gebildet, die beim Auftreffen auf diese Schrägkante besonders effektiv nach außen abgelenkt werden. Besonders vorteilhaft ist ein Ausstellwinkel der Rippe aus der Seitenfläche im Bereich von 15 bis 70 Grad, weiter vorzugsweise im Bereich von 30 bis 50 Grad.

Gemäß allgemeinen Gesichtspunkten der Erfindung sind die Austrittsöffnungen und damit auch die daran angeformten abstehenden Ablenkrippen zu einer Radialrichtung der Seitenfläche um einen vorbestimmten Wert verkippt angeordnet. Im Gegensatz zu der aus dem Stand der Technik bekannten radialen Anordnung der Öffnungsschlitze bzw. der gruppenweise parallelen Anordnung ermöglicht die verkippte Anordnung eine bessere Anpassung an den Strömungsverlauf der Luft im Innenraum zwischen Bremsscheibe und Abdeckvorrichtung und somit eine bessere Wärmeableitung durch die Luftaustrittsöffnungen.

Die Erfinder haben festgestellt, dass eine Anordnung der Rippen zu der Radialrichtung der Seitenfläche der Abschirmvorrichtung derart, dass die Ablenkrippen einen Winkel von 5 bis 60 Grad, weiter vorzugsweise einen Winkel von 20 bis 45 Grad zur Radialrichtung bilden, besonders vorteilhaft für die Wärmeableitung ist.

Gemäß einer bevorzugten Ausgestaltungsform verläuft eine abstehende Längskante der Rippen mit konstantem Abstand zu der Seitenfläche. Mit anderen Worten ist die Breite der Ablenklippen über die gesamte Länge der Luftaustrittsöffnungen konstant, so dass die Rippen über dem ganzen Verlauf der Luftaustrittsöffnungen eine gleichbleibende Angriffsfläche für den Luftstrom bilden.

Bei einer besonders vorteilhaften Variante sind die Luftaustrittsöffnungen sichelförmig ausgebildet. Gemäß einem weiteren Aspekt dieser Variante sind die Rippen in Raddrehrichtung gewölbt ausgebildet. Mit anderen Worten wird die Ablenkrippe durch zwei parallelkurvige Längskanten begrenzt.

Eine andere Ausführungsmöglichkeit sieht vor, dass die Luftaustrittsöffnungen und/oder die Rippen rechteckig ausgebildet sein können.

Gemäß einem bevorzugten Ausführungsbeispiel weist die Bremsscheibenabschirmvorrichtung eine Befestigungserhebung auf, die ausgebildet ist, im montierten Zustand der Abschirmvorrichtung eine Bremsbacke zumindest teilweise zu überdecken.

Gemäß dieser Ausführungsvariante sind die Luftaustrittsöffnungen in einem Bereich angeordnet, der sich an die Befestigungserhebung unmittelbar anschließt. Dadurch kann die Kühlluft direkt nach ihrer Erwärmung an den Bremsbacken nach außen abgeleitet werden. Diese Anordnung beruht auf der Feststellung der Erfinder, dass die Luftströmungsverteilung des am Innendurchmesser der Scheibenbremse eintretenden und durch eine Drehbewegung der Bremsscheibe abgelenkten Luftstroms unmittelbar nach den Bremsbacken noch einen zuverlässig vorhersagbaren Verlauf aufweist, jedoch mit zunehmender Entfernung von den Bremsbacken entlang eines Kreisbogens der Bremsscheibe durch Verwirbelungen etc. gestört wird. Daher können in einem Bereich in Raddrehrichtung unmittelbar nach der Befestigungserhebung die Luftaustrittsöffnungen auf der Seitenoberfläche der Bremsscheibenabschirmvorrichtung vorteilhafterweise so eingearbeitet werden, dass sie möglichst orthogonal zu den Luftströmen ausgerichtet sind.

Besonders vorteilhaft ist, wenn die Luftaustrittsöffnungen in einem begrenzten Bereich angeordnet werden mit einem Mittelpunktswinkel der kleiner als 100 Grad, vorzugsweise kleiner als 80 Grad ist. Der Mittelpunktswinkel wird in Drehrichtung ausgehend von einem Endbereich der Bremsscheibenvorrichtung, der an den Bremsbacken angeordnet wird, gemessen.

Gemäß einem weiteren Aspekt der vorliegenden Erfindung wird zumindest eine Luftaustrittsöffnung der mindestens zwei Luftaustrittsöffnungen in Raddrehrichtung unmittelbar nach der Befestigungserhebung angeordnet. Die weiteren Luftaustrittsöffnungen sind dann in Raddrehrichtung bei Vorwärtsfahrt um einen vorbestimmten Abstandswinkel α um die Radachse platziert. Gemäß einer vorteilhaften Variante liegt der Wert für den Abstandswinkel α im Bereich von 10 bis 25 Grad, weiter vorzugsweise einen Winkel von 12 bis 22 Grad. Bei einer bevorzugten Ausführungsform weist die Bremsscheibenabschirmvorrichtung zwischen zwei und sechs Luftaustrittsöffnungen auf. Die Erfinder haben festgestellt, dass insbesondere vier Luftsaustrittsöffnungen einen besonders vorteilhaften Kompromiss zwischen möglichst guter Kühlleistung einerseits und einer möglichst effektiven Abschirmung der Bremsscheibe andererseits ermöglicht.

Die Bremsscheibenabschirmvorrichtung ist typischerweise als Abschirmblech ausgeführt, das entsprechend einer vorgegebenen Kontur der Luftaustrittsöffnungen und der Ablenkrippen aufgetrennt ist und durch ein geeignetes Verfahren aus der Ebene gedreht ist, so dass die Ablenkrippen nach innen oder nach außen gebogen werden.

Die Erfindung umfasst ferner eine Bremsanlage für ein Kraftfahrzeug, vorzugsweise ein Nutzfahrzeug, umfassend eine Bremsscheibenabschirmvorrichtung nach einem der vorstehend beschriebenen Aspekte. Weiterhin betrifft die Erfindung ein Fahrzeug, insbesondere ein Nutzfahrzeug, umfassend eine Bremsscheibenabschirmvorrichtung bzw. Bremsanlage nach einem der vorstehend beschriebenen Aspekte.

Weitere Einzelheiten und Vorteile der Erfindung werden im Folgenden unter Bezug auf die beigefügten Zeichnungen beschrieben. Es zeigen:
- FIG. 1: eine Perspektivansicht eines Endbereichs einer Fahrzeugachse mit einem Abschirmblech aus dem Stand der Technik;
- FIG. 2A - 2B: aus dem Stand der Technik bekannte Bremsscheibenabschirmbleche;
- FIG. 3: eine Perspektivansicht eines Endbereichs einer Fahrzeugachse mit einem Abschirmblech im montierten Zustand gemäß einem Ausführungsbeispiel;
- FIG. 4: eine der Bremsscheibe abgewandte Seite eines Bremsscheibenabschirmblechs gemäß einem Ausführungsbeispiel;
- FIG. 5: das Bremsscheibenabschirmblech der FIG. 4 in einer Ansicht der x-y-Schnittebene;
- FIG. 6: den Verlauf der Luftströme durch eine Bremsscheibenvorrichtung mit einem Bremsscheibenabschirmblech gemäß einem Ausführungsbeispiel der vorliegenden Erfindung;
- FIG. 7: die Anordnung der Öffnungsschlitze auf einem Bremsscheibenabschirmblech gemäß einem Ausführungsbeispiel der vorliegenden Erfindung;
- FIG. 8: die der Bremsscheibe zugewandte Seite des in FIG. 4 gezeigten Bremsscheibenabschirmblechs;
- FIG. 9: eine der Bremsscheibe abgewandte Seite eines Bremsscheibenabschirmblechs gemäß einem weiteren Ausführungsbeispiel; und
- FIG. 10: eine der Bremsscheibe zugewandte Seite des Bremsscheibenabschirmblechs aus Fig. 9.

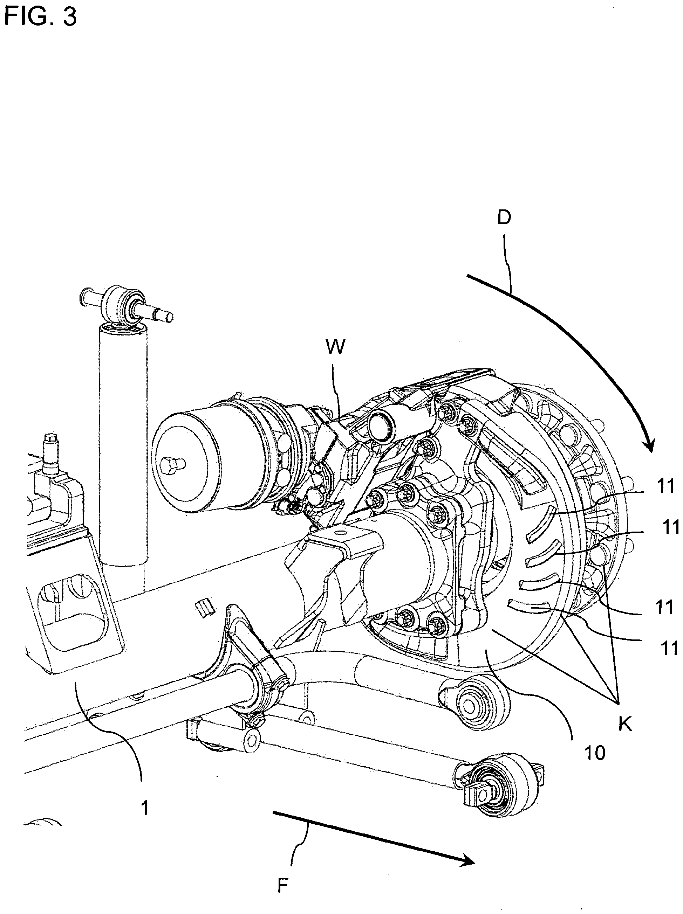

FIG. 3 zeigt eine Perspektivansicht eines Endbereichs einer Fahrzeugachse 1 und ein Bremsscheibenabschirmblech 10 im montierten Zustand auf einer Bremsscheibe. In FIG. 3 sowie in den nachfolgenden Figuren ist die Fahrtrichtung des Fahrzeugs durch den mit dem Bezugszeichen F gekennzeichneten Pfeil gekennzeichnet sowie die Raddrehrichtung in Vorwärtsrichtung durch den mit dem Bezugszeichen D gekennzeichneten Pfeil. An der Stelle, an der die Bremsbacken auf der Bremsscheibe anliegen, erfolgt der Wärmeeintrag W durch die Reibung zwischen Bremsbacken und Bremsscheibe. Die Bremsscheibenabschirmvorrichtung 10 besteht aus einem Schutzblech, in das vier Luftaustrittsöffnungen 11 an der Seitenfläche des Schutzblechs eingearbeitet sind.

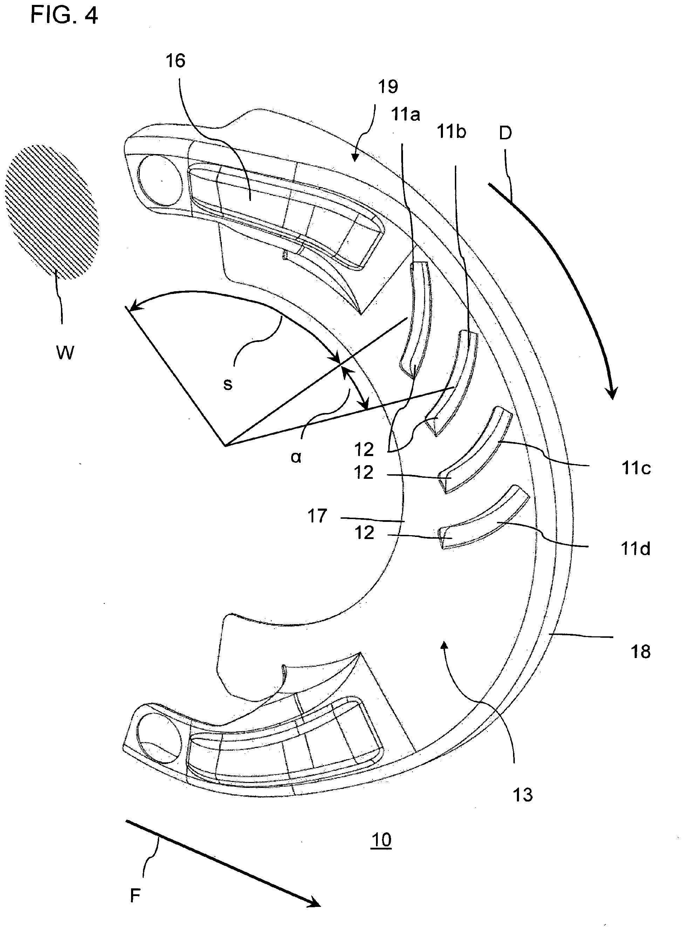

Die konkrete Ausgestaltung des Schutzblechs 10 wird anhand von FIG. 4 näher beschrieben. Die Bremsscheibenabschirmvorrichtung 10 besteht aus einem Schutzblech mit einer sichelförmigen Seitenfläche 13. Eine Innenkontur 17 und eine Außenkontur 18 der sichelförmigen Seitenflächen sind ungefähr halbkreisförmig ausgebildet. Die Abmessungen des Schutzblechs, insbesondere die der Außenkontor 18 sind an die Größe der abzudeckenden Bremsscheibe angepasst. Das Schutzblech 10 weist an einem oberen Endabschnitt eine Befestigungserhebung 16 auf, die ausgebildet ist, im montierten Zustand der Vorrichtung eine Bremsbacke zumindest teilweise zu überdecken. Im Bereich der Befestigungserhebung 16 erfolgt auch der Wärmeeintrag W durch die zwischen Bremsbacke und Bremsscheibe beim Bremsen wirkenden Reibkräfte. Mit W ist wiederum die Stelle des Wärmeeintrags gekennzeichnet.

In die Seitenoberfläche 13 sind vier schlitzartige Luftaustrittsöffnungen 11a - 11d eingearbeitet. Die erste Luftaustrittsöffnung 11a ist dabei im flächigen Bereich 13 des Abschirmblechs 10 direkt im Anschluss an die Befestigungserhebung 16 angeordnet. Bei Vorwärtsfahrt ist somit in Raddrehrichtung der erste Öffnungsschlitz 11a so angeordnet, dass die Länge des Kreisbogens s zwischen Bremsbelag und Mitte des Öffnungsschlitz 11a minimal ist. Mit anderen Worten wird der erste Schlitz 11a möglichst nahe dem Ende der Befestigungserhebung angeordnet. Die weiteren Schlitze 11b-11d sind in Raddrehrichtung (Vorwärtsfahrt) um einen Winkel α um die Radachse platziert. Im vorliegenden Beispiel beträgt der Winkel α ca. 15 Grad.

Gemäß einem weiteren vorteilhaften Aspekt ist der Strömungskanal der Frischluftzufuhr zum Innendurchmesser der Bremsscheibe dahingehend optimiert, dass ein größerer Volumenstrom an Kühlluft zugeführt werden kann. Dies wird dadurch erreicht, dass der Radius der Innenkonturlinie 17 möglichst groß ausgebildet ist, so dass eine möglichst große Öffnung zur Einströmung der Kühlluft am Innendurchmesser der Bremsscheibe gebildet ist.

Nach einem ähnlichen Prinzip ist die äußere umfangseitige Überdeckung der Bremsscheibe durch das Abdeckblech 10 möglichst reduziert, so dass die Abströmung des von der Bremsscheibe erwärmten Fluids gefördert wird. Zum Schutz der Umlaufkante der Bremsscheibe weist das Schutzblech 10 ebenfalls eine Umlaufkante 19 auf, die den Randbereich der Bremsscheibe umfangseitig abschnittsweise überdeckt.

Die Austrittsöffnungen 11a -11d sind sichelförmig ausgebildet und weisen jeweils eine Rippe 12 auf, die von der Seitenfläche 13 nach innen absteht, d. h. zu der der Bremsscheibe zugewandten Seite. Diese angeformten Ablenkrippen 12 können beispielsweise durch Auftrennen der Blechoberfläche gemäß der vorgegebenen sichelförmigen Kontur und durch nachfolgendes Biegen der Blechrippen 12 zur Innenseite eingearbeitet werden.

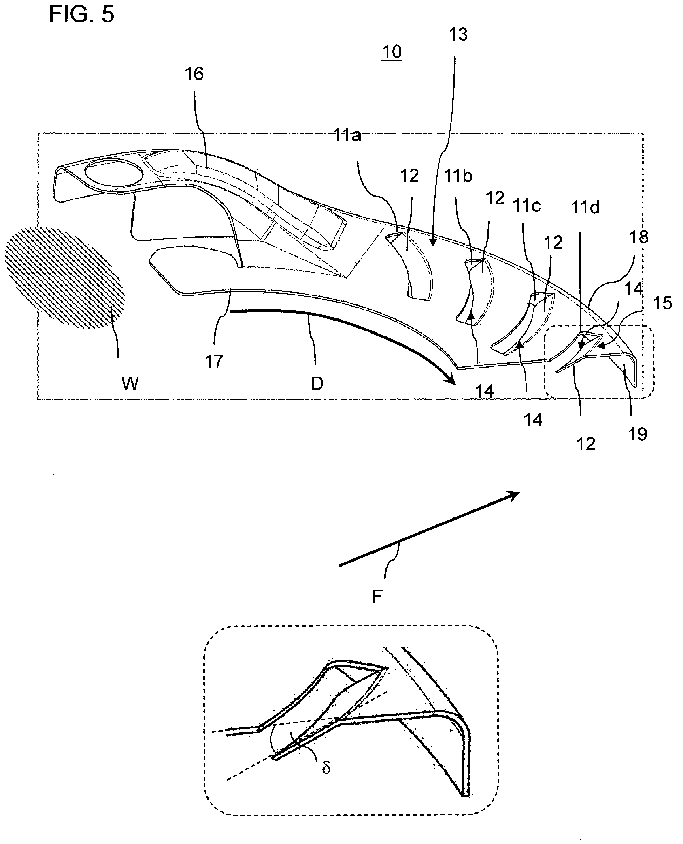

Weitere Details der Ausgestaltung und der Anordnung der Öffnungsschlitze 11 werden anhand der nachfolgenden Figuren erläutert. So zeigt FIG. 5 das Bremsscheibenabschirmblech 10 der FIG. 4 in einer Ansicht der x-y-Schnittebene. Hierbei ist ersichtlich, dass die Rippen 12 durch zwei parallelkurvige Längskanten 14, 15 begrenzt werden, wobei die untere abstehende Längskante 14 mit konstantem Abstand zur Seitenfläche 13 verläuft. Die Rippen 12 sind in Raddrehrichtung gewölbt ausgebildet. Die Ablenkrippen 12 bilden einen spitzen Ausstellwinkel δ von ca. 40 Grad mit der Seitenoberfläche 13, so dass die nach innen abstehenden Ablenkrippen 11a - 11d eine Schrägkante bzw. Ablenkrampe für den im Innenbereich verlaufenden Luftstrom ausbilden, um diesen nach außen effektiv ableiten zu können. Der Ausstellwinkel δ ist auch in dem vergrößerten gestrichelten Ausschnitt der Schnittansicht der Lichtaustrittsöffnung 11d illustriert.

Ferner ist ersichtlich, dass die abstehenden Schrägkanten 12 gleichzeitig eine Teilüberdekkung der Luftaustrittsöffnungen 11a - 11d ausbilden, so dass ein direkter Zugang von außen zu der Bremsscheibe verhindert wird und dadurch ein Schutzmechanismus für die Bremsscheibe ausgebildet wird.

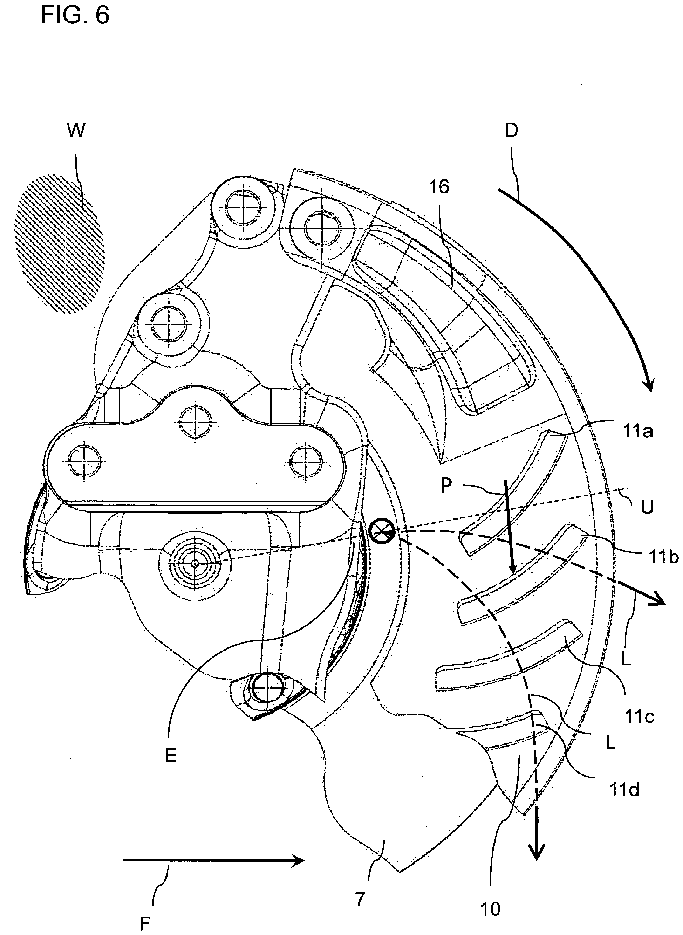

FIG. 6 illustriert den Verlauf der Luftströme im Fahrbetrieb durch eine Bremsscheibenvorrichtung mit einem Bremsscheibenabschirmblech gemäß einem Ausführungsbeispiel. FIG. 6 zeigt das Bremsscheibenabschirmblech 10 im montierten Zustand auf der Bremsscheibe 7. Am inneren Bremsscheibendurchmesser wird Frischluft eingeleitet, was in FIG. 6 durch die Stelle E gekennzeichnet ist. Bei Vorwärtsfahrt in Richtung D wird die an der Stelle E eintretende Frischluft durch die Drehung der Bremsscheibe in Richtung D zur Bremsscheibe hin und in Raddrehrichtung D abgebogen. Die Ablenkung der eintreffenden Luftströme durch die Drehbewegung der Bremsscheibe ist durch den Pfeil P illustriert. Eine typische auftretende Luftstromverteilung ist durch die dick gestrichelten Pfeile L dargestellt. Die dünn gestrichelte Linie U gibt die Eintrittsrichtung und die unabgelenkte Richtung U des Luftstroms in Radialrichtung an. Der Verlauf der Luftströme L kann beispielsweise vorab experimentell durch entsprechende Messvorrichtungen gemessen und/oder durch Simulationen berechnet werden. Der erwartete Luftströmungsverlauf kann auf diese Weise für die Fahrgeschwindigkeit bestimmt werden, für die die Luftaustrittsöffnungen 11 die bestmögliche Kühlung erzielen sollen, z. B. in einem Geschwindigkeitsbereich von 75 km/h bis 90 km/h. Die in die Seitenoberfläche 13 eingearbeiteten Luftaustrittsöffnungen 11a - 11d werden dann so angeordnet, dass die Rippen im Wesentlichen senkrecht zu der Luftstromrichtung L eines im Fahrbetrieb durch eine Drehbewegung der Bremsscheibe abgelenkten Luftstroms ausgerichtet sind. Die sichelförmige Krümmung der Ablenkrippen erlaubt eine besonders vorteilhafter Anpassung an die Flugbahn L der Luftpartikel.

In Verbindung mit der rampenförmigen Ausbildung der Ablenkrippen 12 wird der auftretende Luftstrom dann nach oben aus der Luftaustrittsöffnung 11 herausgeleitet und nicht in den Innenbereich zwischen Bremsscheibe 7 und Abdeckblech 10 zurückreflektiert.

FIG. 6 illustriert weiterhin, dass es vorteilhaft ist, die Ablenkrippen 11a - 11d in dem Bereich anzuordnen, der sich unmittelbar an die Befestigungserhebung 16 anschließt. In diesem Bereich ist der eintreffende Kaltluftstrom einer vorbestimmten Ablenkung P ausgesetzt, die mit der Fahrgeschwindigkeit zunimmt, so dass die angeformten Schrägkanten 12 so ausgerichtet werden können, dass sie jeweils senkrecht zu der Luftstromrichtung L angeordnet sind.

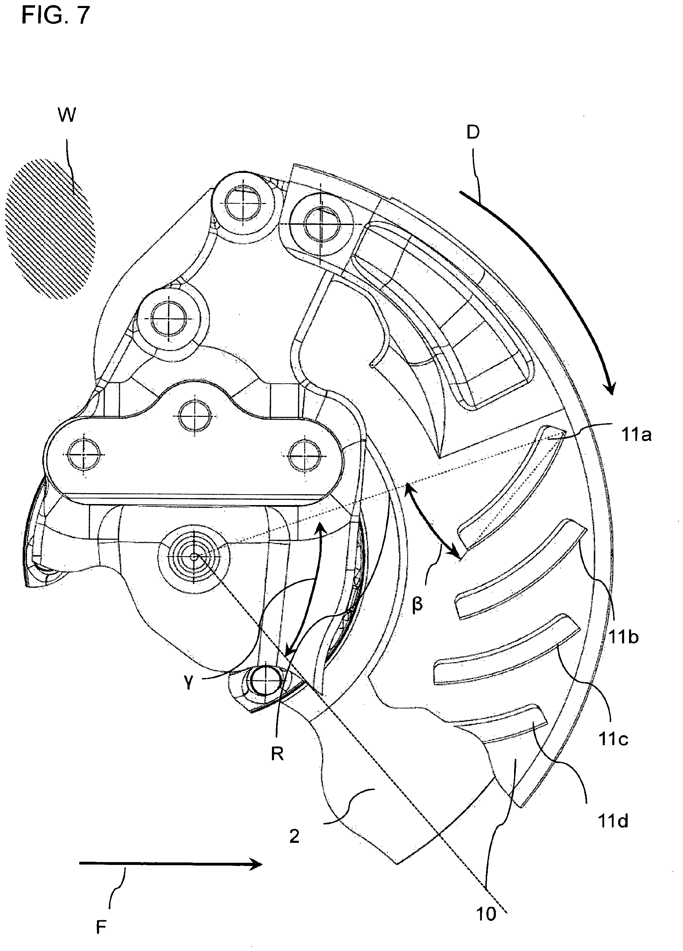

Nach der Luftaustrittsöffnung 11d ist der Luftstrom zunehmend Verwirbelungen und Reflektionen an den Wänden des Abschirmblechs etc. ausgesetzt, so dass eine nachfolgende Anordnung der Luftaustrittsöffnungen 11 weniger effektiv auf den Luftstrom abgestimmt werden kann. Dieser vorteilhafte Bereich ist nochmals in FIG. 7 anhand des Winkels γ dargestellt. Typischerweise ist der vorteilhafte Bereich durch einen Mittelpunktswinkel γ gekennzeichnet, der kleiner als 100 Grad, vorzugsweise kleiner als 80 Grad ist.

In FIG. 7 ist weiterhin gezeigt, dass jede der Luftaustrittsöffnungen 11 und damit auch jede der Rippen 12 zu einer Radialrichtung R der Seitenfläche 13 um einen vorbestimmten Wert β verkippt angeordnet ist. Der Winkel β liegt in dem Ausführungsbeispiel in einem Bereich von 20 bis 45 Grad.

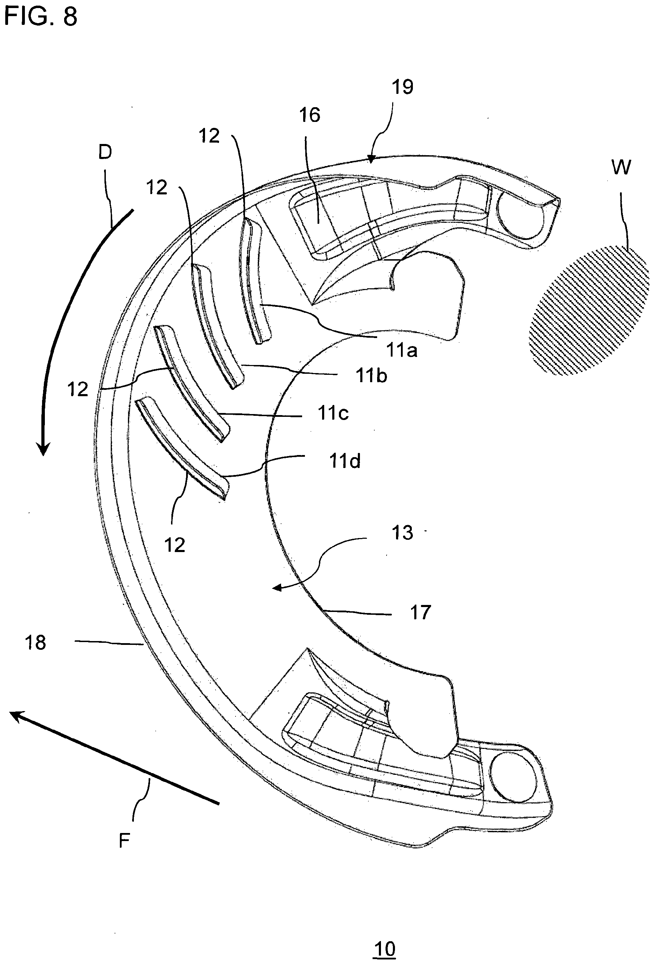

FIG. 8 zeigt die der Bremsscheibe zugewandte Seite des in FIG. 4 gezeigten Bremsscheibenabschirmblechs 10.

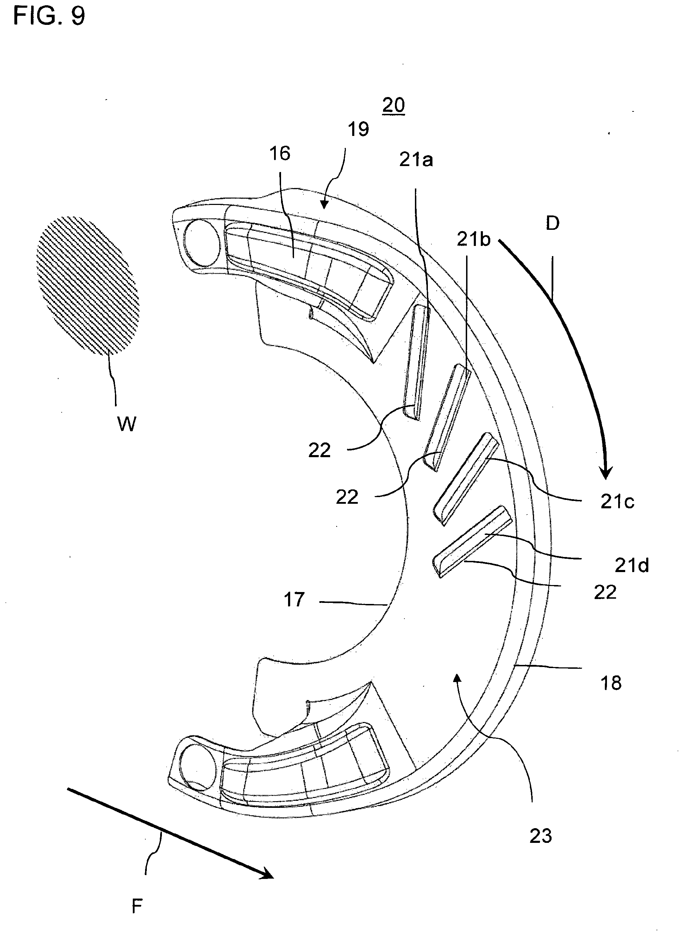

In FIG. 9 ist ein weiteres Ausführungsbeispiel eines Abschirmblechs 20 dargestellt, bei dem im Unterschied zu dem vorher beschriebenen Ausführungsbeispiel die Luftaustrittsöffnungen 21 nicht sichelförmig, sondern rechteckig ausgeführt sind. Dementsprechend sind die angeformten Rippen 22, die nach innen abstehen, ebenfalls rechteckig ausgebildet und bilden eine planare Ablenkfläche für den Luftstrom der Bremsvorrichtung. Ansonsten entspricht die konstruktive Ausführung der zuvor beschriebenen Bremsscheibenabschirmvorrichtung 10.

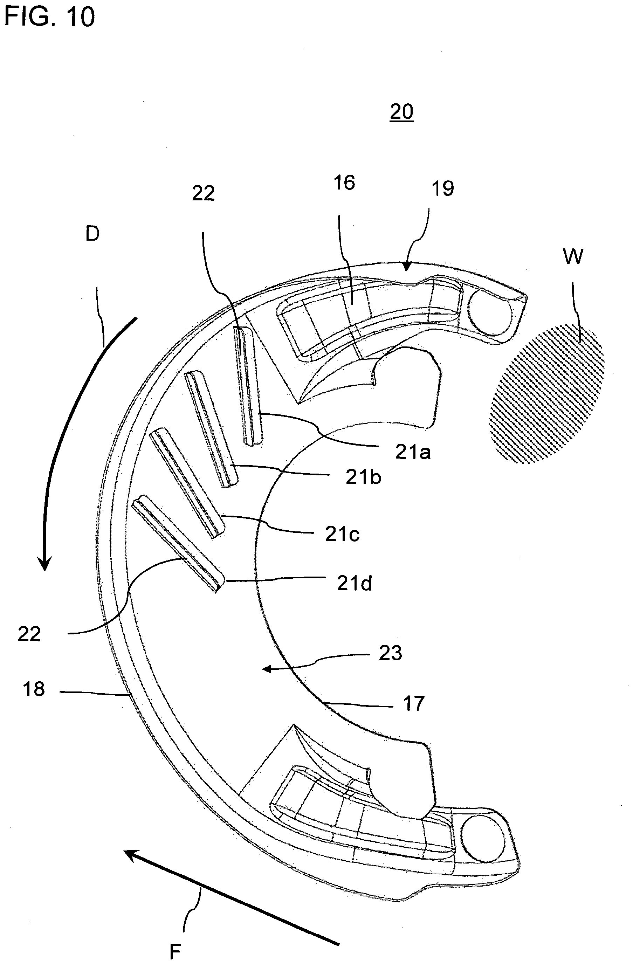

FIG. 10 zeigt wiederum eine der Bremsscheibe zugewandte Seite des Bremsscheibenabschirmblechs 20 aus FIG. 9.

Zusammengefasst beinhaltet die Erfindung somit ein Bremsscheibenabschirmblech zum Schutz bzw. zur Erhöhung der Standfestigkeit einer Bremsanlage an einem Nutzfahrzeug. Entscheidend für die Funktionen sind zum einen die physische Abschirmung der Bremsscheibe von der Umwelt und zum anderen die Optimierung des Kühlmittelstroms zur Erlangung einer reduzierten Betriebstemperatur der Bremse.

Obwohl die Erfindung unter Bezugnahme auf bestimmte Ausführungsbeispiele beschrieben worden ist, ist es für einen Fachmann ersichtlich, das verschiedene Änderungen ausgeführt werden können und Äquivalente als Ersatz verwendet werden können, ohne den Bereich der Erfindung zu verlassen. Zusätzlich können viele Modifikationen ausgeführt werden, um eine bestimmte Situation (z. B. Fahrgeschwindigkeitsbereich, für den die Rippenausrichtung optimiert werden soll) oder eine bestimmte konstruktive Ausführung der Bremsanlage (Größe der Bremsscheibe, Frischlufteintrittsverlauf etc.) an die Lehre der Erfindung anzupassen, ohne den zugehörigen Bereich zu verlassen. Folglich soll die Erfindung nicht auf das offenbarte bestimmte Ausführungsbeispiel begrenzt sein, sondern die Erfindung soll alle Ausführungsbeispiele umfassen, die in den Bereich der beigefügten Patentansprüche fallen.

### Bezugszeichenliste

- 1: Radachse
- 2, 3, 4: Bremsscheibenabschirmblech (Stand der Technik)
- 5, 6: Öffnungsschlitz (Stand der Technik)
- W: Wärmeeintrag durch Bremsbelag
- D: Raddrehrichtung
- F: Fahrrichtung
- 7: Bremsscheibe
- 10, 20: Bremsscheibenabschirmblech
- 11, 21: Luftaustrittsöffnungen
- 12, 22: Ablenkrippe
- 13, 23: Seitenfläche
- 14: Außenlängskante
- 15: Innenlängskante
- 16: Befestigungserhebung
- 17: Innenendbereich
- 18: Außenendbereich
- 19: äußere Überdeckung
- α: Winkel α
- s: Kreisbogen s
- β: Drehwinkel
- γ: Mittelpunktswinkel
- δ: Ausstellwinkel der Rippen
- E: Frischlufteintritt
- L: Luftstromrichtung
- P: Ablenkung durch Drehbewegung
- U: ursprüngliche Strömungsrichtung
- R: Radialrichtung der Seitenfläche

## Patentansprüche

1. Bremsscheibenabschirmvorrichtung für eine Scheibenbremse, mit
(a) mindestens zwei Luftaustrittsöffnungen (11; 21) in einer Seitenfläche (13; 23) der Bremsscheibenabschirmvorrichtung (10; 20), wobei die Seitenfläche der Bremsscheibenabschirmvorrichtung (10; 20) derjenige Teil der Bremsscheibenabschirmvorrichtung ist, der im montierten Zustand eine Bremsscheibenseitenfläche zumindest teilweise überdeckt, und
(b) die Luftaustrittsöffnungen (11; 21) jeweils eine Rippe (12; 22) aufweisen, die von der Seitenfläche (13; 23) absteht, **dadurch gekennzeichnet,**
(c) **dass** die Rippen derart zu einer Radialrichtung (R) der Seitenfläche (13; 23) verkippt angeordnet sind, dass die Rippen (12; 22) im Wesentlichen senkrecht zu einer Luftstromrichtung (L) eines im Fahrbetrieb durch eine Drehbewegung der Bremsscheibe (7) abgelenkten Luftstroms angeordnet sind.

2. Vorrichtung nach Anspruch 1, **dadurch gekennzeichnet, dass** die Luftaustrittsöffnungen (11; 21) bzw. die Rippen (12; 22) zu der Radialrichtung um einen Winkel (β) verkippt angeordnet sind, der in einem Bereich von 5 bis 60 Grad liegt, vorzugsweise im Bereich von 20 bis 45 Grad.

3. Vorrichtung nach einem der vorhergehenden Ansprüche, **dadurch gekennzeichnet,**
(a) **dass** die Rippen (12; 22) nach innen abstehen, d.h. zu der der Bremsscheibe (7) zugewandten Seite; oder
(b) **dass** die Rippen (12; 22) nach außen abstehen, d.h. zu der von der Bremsscheibe (7) abgewandten Seite.

4. Vorrichtung nach einem der vorhergehenden Ansprüche, **dadurch gekennzeichnet, dass** eine abstehende Längskante (14) der Rippen (12; 22) mit konstantem Abstand zur der Seitenfläche (13; 23) verläuft.

5. Vorrichtung nach einem der vorhergehenden Ansprüche, **dadurch gekennzeichnet, dass** eine Seitenfläche der Rippen (12; 22) einen spitzen Ausstellwinkel mit der Seitenfläche (13; 23) im Bereich von 15 bis 70 Grad bildet.

6. Vorrichtung nach Anspruch 5, **dadurch gekennzeichnet, dass** der Ausstellwinkel im Bereich von 30 bis 50 Grad liegt.

7. Vorrichtung nach einem der vorhergehenden Ansprüche, **dadurch gekennzeichnet,**
(a) **dass** die Luftaustrittsöffnungen (11) sichelförmig ausgebildet sind; und/oder
(b) **dass** die Rippen (12) in Raddrehrichtung (D) gewölbt ausgebildet sind.

8. Vorrichtung nach einem der vorhergehenden Ansprüche, **dadurch gekennzeichnet, dass** die Luftaustrittsöffnungen (21) und/oder die Rippen (22) rechteckig ausgebildet sind.

9. Vorrichtung nach einem der vorhergehenden Ansprüche, **gekennzeichnet durch** eine Befestigungserhebung (16), die ausgebildet ist, im montierten Zustand der Vorrichtung eine Bremsbacke zumindest teilweise zu überdecken, wobei die Luftaustrittsöffnungen (11; 21) in einem Bereich angeordnet sind, der sich an die Befestigungserhebung (16) unmittelbar anschließt.

10. Vorrichtung nach Anspruch 9, **dadurch gekennzeichnet, dass** der Bereich einen Mittelpunktswinkel (γ) aufweist, der kleiner als 100 Grad, vorzugsweise kleiner als 80 Grad ist.

11. Vorrichtung nach einem der vorhergehenden Anspruch, **dadurch gekennzeichnet, dass** die Bremsscheibenabschirmvorrichtung (10; 20) als Abschirmblech ausgeführt ist, mit aus der Seitenfläche herausgebogenen Abschnitten (11; 21) zur Ausbildung der Rippen.

12. Vorrichtung nach einem der vorhergehenden Ansprüche, **dadurch gekennzeichnet, dass** die Anzahl der Austrittsöffnungen (11a bis 11d; 21a bis 21d) im Bereich 2 bis 6 liegt.

13. Bremsanlage für ein Fahrzeug, umfassend eine Bremsscheibenabschirmvorrichtung nach einem der vorhergehenden Ansprüche.

14. Fahrzeug, insbesondere ein Nutzfahrzeug, umfassend eine Bremsscheibenabschirmvorrichtung nach einem der vorhergehenden Ansprüche 1 bis 12 oder eine Bremsanlage nach Anspruch 13.

## Claims

1. Brake disc shielding device for a disc brake, having
(a) at least two air outlet openings (11; 21) in a side face (13; 23) of the brake disc shielding device (10; 20), wherein the side face of the brake disc shielding device (10; 20) is that part of the brake disc shielding device which in the mounted state at least partially covers a brake disc side face, and
(b) the air outlet openings (11; 21) each have a rib (12; 22), which projects from the side face (13; 23), **characterized in that**
(c) **in that** the ribs are arranged so as to be tilted relative to a radial direction (R) of the side face (13; 23) in such a way that the ribs (12; 22) are arranged substantially perpendicularly to an air flow direction (L) of an air flow deflected by a rotary motion of the brake disc (7) during driving.

2. Device according to Claim 1, **characterized in that** the air outlet openings (11; 21) and the ribs (12; 22) are arranged so as to be tilted relative to the radial direction by an angle (β) which is in a range of from 5 to 60 degrees, preferably in a range of from 20 to 45 degrees.

3. Device according to one of the preceding claims, **characterized**
(a) **in that** the ribs (12; 22) project inwards, i.e. towards the side facing the brake disc (7); or
(b) **in that** the ribs (12; 22) project outwards, i.e. towards the side facing away from the brake disc (7).

4. Device according to one of the preceding claims, **characterized in that** a projecting longitudinal edge (14) of the ribs (12; 22) is at a constant distance from the side face (13; 23).

5. Device according to one of the preceding claims, **characterized in that** a side face of the ribs (12; 22) forms an acute angle of incidence with the side face (13; 23) in a range of from 15 to 70 degrees.

6. Device according to Claim 5, **characterized in that** the angle of incidence is in a range of from 30 to 50 degrees.

7. Device according to one of the preceding claims, **characterized**
(a) **in that** the air outlet openings (11) are of crescent-shaped design; and/or
(b) **in that** the ribs (12) are of arched design in the direction of wheel rotation (D).

8. Device according to one of the preceding claims, **characterized in that** the air outlet openings (21) and/or the ribs (22) are of rectangular design.

9. Device according to one of the preceding claims, **characterized by** a fastening boss (16), which is designed to at least partially cover a brake pad in the assembled state of the device, wherein the air outlet openings (11; 21) are arranged in a region directly adjoining the fastening boss (16).

10. Device according to Claim 9, **characterized in that** the region has a centre angle (γ) which is less than 100 degrees, preferably less than 80 degrees.

11. Device according to one of the preceding claims, **characterized in that** the brake disc shielding device (10; 20) is embodied as a shielding plate, having sections (11; 21) bent out of the side face to form the ribs.

12. Device according to one of the preceding claims, **characterized in that** the number of outlet openings (11a to 11d; 21a to 21d) is in a range of from 2 to 6.

13. Brake system for a vehicle, comprising a brake disc shielding device according to one of the preceding claims.

14. Vehicle, in particular a utility vehicle, comprising a brake disc shielding device according to one of preceding Claims 1 to 12 or a brake system according to Claim 13.

## Revendications

1. Dispositif de protection pour un disque de frein de frein à disque, avec :
(a) au moins deux ouvertures de sortie d'air (11 ; 21) prévues dans une surface latérale (13 ; 23) du dispositif de protection de disque de frein (10 ; 20), la surface latérale du dispositif de protection de disque de frein (10 ; 20) étant la partie du dispositif de protection pour un disque de frein recouvrant au moins en partie à l'état monté une surface latérale de disque de frein ; et
(b) les ouvertures de sortie d'air (11 ; 21) comportant respectivement une nervure (12 ; 22) saillant hors de la surface latérale (13 ; 23) ;
**caractérisé en ce que** :
(c) les nervures sont disposées de telle sorte de façon basculante par rapport à une direction radiale (R) de la surface latérale (13 ; 23) que les nervures (12 ; 22) sont disposées pour l'essentiel perpendiculairement à une direction de courant d'air (L) d'un courant d'air dévié, en mode d'avancée, par un mouvement de rotation du disque de frein (7) .

2. Dispositif selon la revendication 1, **caractérisé en ce que** les ouvertures de sortie d'air (11 ; 21) et/ou les nervures (12 ; 22) sont disposées de façon basculante d'un angle (β) par rapport à la direction radiale, ledit angle étant situé dans une plage de 5 à 60 degrés, de préférence dans la plage de 20 à 45 degrés.

3. Dispositif selon l'une quelconque des revendications précédentes, **caractérisé en ce que** :
(a) les nervures (12 ; 22) ressortent vers l'intérieur, c'est-à-dire en direction du côté orienté vers le disque de frein (7) ; ou
(b) les nervures (12 ; 22) ressortent vers l'extérieur, c'est-à-dire en direction du côté opposé du disque de frein (7) .

4. Dispositif selon l'une quelconque des revendications précédentes, **caractérisé en ce qu'**une arête longitudinale (14) saillante des nervures (12 ; 22) s'étend à distance constante de la surface latérale (13 ; 23).

5. Dispositif selon l'une quelconque des revendications précédentes, **caractérisé en ce qu'**une surface latérale des nervures (12 ; 22) forme un angle de déflexion aigu avec la surface latérale (13 ; 23) dans la plage de 15 à 70 degrés.

6. Dispositif selon la revendication 5, **caractérisé en ce que** l'angle de déflexion se situe dans la plage de 30 à 50 degrés.

7. Dispositif selon l'une quelconque des revendications précédentes, **caractérisé en ce que** :
(a) les ouvertures de sortie d'air (11) sont réalisées en forme de faucille ; et/ou
(b) les nervures (12) sont réalisées de façon bombée dans la direction de rotation des roues (D).

8. Dispositif selon l'une quelconque des revendications précédentes, **caractérisé en ce que** les ouvertures de sortie d'air (21) et/ou les nervures (22) sont réalisées de façon rectangulaire.

9. Dispositif selon l'une quelconque des revendications précédentes, **caractérisé par** une partie relevée de fixation (16) réalisée pour recouvrir au moins en partie, à l'état monté du dispositif, une mâchoire de frein, les ouvertures de sortie d'air (11 ; 21) étant disposées dans une région directement connexe à la partie relevée de fixation (16).

10. Dispositif selon la revendication 9, **caractérisé en ce que** la région comporte un angle central (γ) inférieur à 100 degrés, de préférence inférieur à 80 degrés.

11. Dispositif selon l'une quelconque des revendications précédentes, **caractérisé en ce que** le dispositif de protection de disque de frein (10 ; 20) est réalisé sous la forme d'une tôle de protection avec des sections (11 ; 21) incurvées hors de la surface latérale pour former les nervures.

12. Dispositif selon l'une quelconque des revendications précédentes, **caractérisé en ce que** le nombre d'ouvertures de sortie (11a à 11d ; 21a à 21d) se situe dans la plage de 2 à 6.

13. Installation de frein pour un véhicule, comprenant un dispositif de protection de disque de frein selon l'une quelconque des revendications précédentes.

14. Véhicule, notamment véhicule utilitaire, comprenant un dispositif de protection de disque de frein selon l'une quelconque des revendications précédentes 1 à 12 ou une installation de frein selon la revendication 13.
